# FASCICULE DE BREVET EUROPEEN

(11) **EP 3 735 528 B1**
(45) Date de publication et mention de la délivrance du brevet: **12.01.2022**
(21) Numéro de dépôt: 19711153.7
(22) Date de dépôt: 14.02.2019
(51) Int. Cl.: F02K 1/80, F02C 7/28, F01D 9/06

(54) **DISPOSITIF DE RESISTANCE AU FEU DESTINE A ETRE INTERPOSE ENTRE UNE EXTREMITE AMONT DE MAT D'ACCROCHAGE DE TURBOMACHINE D'AERONEF, ET UN CAPOTAGE DE LA TURBOMACHINE DELIMITANT UN COMPARTIMENT INTER-VEINE**
FEUERWIDERSTANDSVORRICHTUNG, DIE DAZU BESTIMMT IST, ZWISCHEN EINEM STROMAUFWÄRTIGEN ENDE EINER FLUGZEUGTURBINENTRIEBWERKSAUFHÄNGUNGSSTRUKTUR UND EINER VERKLEIDUNG DES TURBINENTRIEBWERKS, DIE EINEN ZWISCHENSTRÖMUNGSRAUM BEGRENZT, ANGEORDNET ZU WERDEN
FIRE RESISTANCE DEVICE INTENDED TO BE INTERPOSED BETWEEN AN UPSTREAM END OF AN AIRCRAFT TURBINE ENGINE MOUNTING STRUCTURE AND A COWLING OF THE TURBINE ENGINE DELIMITING AN INTER-FLOW COMPARTMENT

(30) Priorité: 16.02.2018 FR 1851349
(43) Date de publication de la demande: 11.11.2020
(73) Titulaire: SAFRAN AIRCRAFT ENGINES, 75015 Paris (FR)
(72) Inventeur: JACON, Bruno, 77550 Moissy-Cramayel (FR); ACHBARI, Baghdad, 77550 Moissy-Cramayel (FR); BROAGE, Thomas, Claude, 77550 Moissy-Cramayel (FR); SIMONOTTI, Hervé, 77550 Moissy-Cramayel (FR); AKACHKACHY, Soufien, 77550 Moissy-Cramayel (FR); CHERET, Charles, Maurice, Jean-Louis, 77550 Moissy-Cramayel (FR); TAGLIALAVORE, Joseph, 77550 Moissy-Cramayel (FR)
(74) Mandataire: Brevalex
(86) Numéro de dépôt international: PCT/FR2019/050334
(87) Numéro de publication internationale: WO 2019/158867

(56) Documents cités:
- FR-A1- 2 920 215

## Description

### DOMAINE TECHNIQUE

L'invention concerne la fonction de résistance au feu entre un compartiment inter-veine d'une turbomachine d'aéronef à double flux, et une zone amont de mât d'accrochage de cette turbomachine. Elle vise en particulier à éviter qu'un feu initié dans le compartiment inter-veine puisse se propager dans la zone amont de mât d'accrochage.

L'invention s'applique à tout type de turbomachine à double flux, et en particulier à un turboréacteur.

### ETAT DE LA TECHNIQUE ANTERIEURE

Dans une turbomachine d'aéronef à double flux, il est habituellement prévu, en aval de la soufflante, un ou plusieurs bras traversant radialement la veine secondaire. Ce bras est typiquement agencé de manière à relier un compartiment de soufflante situé autour de la virole extérieure d'un carter intermédiaire, à un compartiment inter-veine. Ces deux compartiments logent de manière classique des équipements et des servitudes, tandis que le bras interposé entre eux deux permet le passage de différents éléments tels que des câbles électriques, et/ou des canalisations fluidiques.

Le document FR 2 920 215 divulgue une turbomachine d'aéronef à double flux de l'art antérieur.

L'extrémité radialement interne d'un tel bras est raccordée à un anneau amont, délimitant en partie le compartiment inter-veine radialement vers l'extérieur. Cet anneau forme ainsi l'extrémité amont de l'ensemble des capotages formant l'enveloppe extérieure du compartiment inter-veine. Pour assurer la jonction entre le bras et l'anneau amont, il est prévu d'intercaler entre eux deux capotages de raccord, qui se situent respectivement latéralement de part et d'autre d'une extrémité amont du mât d'accrochage.

Le mât d'accrochage, qui sert à fixer la turbomachine sur un élément de voilure de l'aéronef, peut en effet présenter une extrémité amont à proximité de la jonction entre le bras traversant la veine secondaire, et l'anneau amont du compartiment inter-veine. Se pose alors la problématique de la fonction anti-feu, puisqu'il est recherché à éviter la propagation d'une éventuelle flamme se déclarant dans le compartiment inter-veine, en particulier pour interdire à cette flamme d'atteindre la zone amont du mât d'accrochage située à proximité.

Il existe par conséquent un besoin d'aboutir à un dispositif de résistance au feu dont la conception garantit la fonction désirée, autorise sa facile intégration dans l'environnement dense et complexe de la zone concernée, et permet une fabrication aisée.

### RESUME DE L'INVENTION

Pour résoudre au moins partiellement à ce besoin, l'invention a tout d'abord pour objet un dispositif de résistance au feu selon les caractéristiques de la revendication 1.

L'invention se révèle ainsi avantageuse en ce qu'elle prévoit un dispositif de résistance au feu qui s'avère performant, qui s'intègre parfaitement dans son environnement, et dont le caractère préférentiel monobloc rend sa fabrication particulièrement aisée et peu coûteuse, notamment au regard de l'outillage requis.

L'aspect monobloc est rendu possible par la géométrie simple du dispositif selon l'invention, notamment par l'emploi de lèvres de contact. Celles-ci ne requièrent d'ailleurs pas l'utilisation d'insert lors de la fabrication du dispositif, par opposition par exemple à la mise en œuvre de zones de contact creuses, dites à bourrelet ou à boudin. De plus, une lèvre se révèle habituellement facilement déformable, de sorte qu'il n'est pas nécessaire de lui faire subir une opération spécifique de précontrainte après son assemblage. La déformation requise pour garantir sa fonction de barrière au feu peut simplement résulter de l'appui d'un élément environnant, comme par exemple l'appui d'un joint de capot mobile de nacelle destiné à s'écraser dans la zone.

Enfin, il est indiqué qu'avec ses deux lèvres de contact, le dispositif de résistance au feu selon l'invention permet de former deux barrières physiques distinctes et sensiblement contigües. L'une est prévue pour stopper l'éventuel feu dans le compartiment inter-veine afin qu'il ne se propage pas circonférentiellement vers la face latérale du mât ni radialement vers une face d'extrémité amont de ce dernier, et l'autre est prévue de sorte que cet éventuel feu ne se propage pas axialement vers l'aval, le long de cette même face latérale du mât.

L'invention prévoit de préférence au moins l'une des caractéristiques techniques optionnelles suivantes, prises isolément ou en combinaison.

De préférence, ladite seconde ligne est droite, et de préférence sensiblement orthogonale à une première surface de contact sensiblement plane dans laquelle s'inscrit la première ligne courbe. Néanmoins, d'autres formes de ligne et d'autres inclinaisons peuvent être retenues en fonction des surfaces d'appui à contacter, sans sortir du cadre de l'invention.

De préférence, la première lèvre de contact définit, entre une base de celle-ci et la première extrémité de contact, une première direction générale de lèvre inclinée par rapport à la normale à la première surface de contact, et/ou la seconde lèvre de contact définit, entre une base de celle-ci et la seconde extrémité de contact, une seconde direction générale de lèvre inclinée par rapport à la normale à une surface d'appui de cette seconde lèvre. Grâce à ces inclinaisons, l'écrasement des lèvres est facilité, notamment durant les mouvements relatifs rencontrés en vol entre la turbomachine et son mât. Ce principe est d'ailleurs applicable lorsque les premier et second organes de contact prennent une autre forme que celle d'une lèvre.

De préférence, la première portion de support présente une forme générale de cornière.

De préférence, le dispositif comprend également une portion de fixation s'étendant à partir de la première portion de support, ladite portion de fixation étant préférentiellement traversée par des trous de passage d'éléments de fixation.

De préférence, la seconde portion de support porte, à l'opposé du second organe de contact et de sa seconde zone de jonction, des éléments allongés de fixation. Ces éléments allongés de fixation peuvent alors facilement coopérer avec le capotage de raccord, pour un meilleur maintien sur ce dernier.

De préférence, le dispositif est formé par la superposition d'au moins une couche en matériau élastomère, de préférence en élastomère silicone, et d'au moins une couche fibreuse, de préférence en céramique, verre ou meta-aramide (poly(m-phénylèneisophtalamide)). D'autres types de couches sont néanmoins possibles, sans sortir du cadre de l'invention. Il est noté qu'une couche de tissu céramique s'avère particulièrement efficace pour la fonction de résistance au feu, tandis qu'une couche de fibres de verre permet de raidir l'empilement, et de limiter le fluage d'élastomère silicone dans le plan orthogonal à la direction de superposition des couches, en cas de sollicitation mécanique selon cette dernière direction. Enfin, une couche de fibres de meta-aramide permet également un tel raidissement.

De préférence, une ou plusieurs couches fibreuses s'étendent sur toute la longueur du premier organe de contact, de même qu'une ou plusieurs couches fibreuses s'étendent sur toute la longueur du second organe de contact.

L'invention a également pour objet un ensemble propulseur pour aéronef comprenant une turbomachine d'aéronef à double flux, ainsi qu'un mât d'accrochage de la turbomachine destiné à sa fixation sur un élément de voilure de l'aéronef,
la turbomachine comportant un compartiment inter-veine agencé entre une veine primaire et une veine secondaire de la turbomachine, ainsi qu'un bras traversant radialement une veine secondaire et communiquant avec le compartiment inter-veine, ce dernier étant en partie délimité radialement vers l'extérieur par un anneau amont raccordé au bras à l'aide de deux capotages de raccord agencés respectivement de part et d'autre d'une extrémité amont du mât d'accrochage, selon une direction transversale de l'ensemble propulseur,
l'extrémité amont du mât d'accrochage comprenant deux faces latérales, ainsi qu'une portée périphérique suivant le contour d'une base de cette extrémité amont de mât.

Selon l'invention, l'ensemble propulseur comprend également, associé à chaque capotage de raccord, un dispositif de résistance au feu tel que décrit précédemment, interposé entre l'extrémité amont du mât d'accrochage et le capotage de raccord auquel est fixé le dispositif.

De préférence, la première extrémité de contact du premier organe de contact est en appui sur la portée périphérique de l'extrémité amont du mât d'accrochage, et la seconde extrémité de contact du second organe de contact est en appui sur la face latérale correspondante de l'extrémité amont du mât d'accrochage.

De préférence, la première ligne courbe s'inscrit dans une première surface de contact sensiblement plane, et sensiblement parallèle à la direction transversale ainsi qu'à une direction longitudinale de l'ensemble, et la seconde ligne définie par le second organe de contact est une droite s'étendant sensiblement parallèlement à une direction verticale de l'ensemble.

Enfin, le second organe de contact est préférentiellement contraint entre la face latérale de l'extrémité amont du mât d'accrochage, et un joint de capot mobile de nacelle.

L'invention a également pour objet un procédé de fabrication d'un dispositif de résistance au feu tel que décrit ci-dessus, mis en œuvre de sorte que le dispositif soit réalisé monobloc, c'est-à-dire d'une seule pièce, et de préférence par moulage.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 est une vue en perspective d'un ensemble propulseur selon un mode de réalisation préféré de l'invention ;
- la figure 2 représente une vue éclatée en perspective d'une partie de l'ensemble propulseur montré sur la figure 1 ;
- la figure 3 représente une vue en perspective de la partie montrée sur la figure précédente ;
- la figure 4 est une vue de côté de celle montrée sur la figure précédente, avec le dispositif de résistance au feu représenté en pointillés ;
- la figure 5 est une vue en coupe prise le long de la ligne V-V de la figure 4;
- les figures 5a, 5b, 5c montrent des vues agrandies en coupe du dispositif de résistance montré sur la figure précédente, dans différents états de compression ;
- la figure 6 est une vue en perspective de la partie montrée sur les figures 2 à 4, schématisant la ligne d'étanchéité obtenue grâce au dispositif de résistance au feu ;
- les figures 7 à 9 sont des vues en perspective du dispositif de résistance au feu montré sur les figures précédentes, représenté selon différents angles de vue ;
- la figure 10 est une vue de côté du dispositif de résistance au feu montré sur les figures 7 à 9 ;
- la figure 11 est une vue de dessus d'une partie du dispositif de résistance au feu montré sur la figure précédente ;
- la figure 12 est une vue en coupe prise le long de la ligne XII-XII de la figure 10 ;
- la figure 13 est une vue en coupe prise le long de la ligne XIII-XIII de la figure 12 ;
- la figure 14 est une vue en coupe prise le long de la ligne XIV-XIV de la figure 12 ;
- la figure 15 représente une vue agrandie de dessus de la partie montrée sur les figures 2 à 4, montrant en particulier la seconde lèvre de contact du dispositif de résistance au feu ; et
- la figure 16 représente une vue de face de celle montrée sur la figure précédente.

### EXPOSE DETAILLE DE MODES DE REALISATION PREFERES

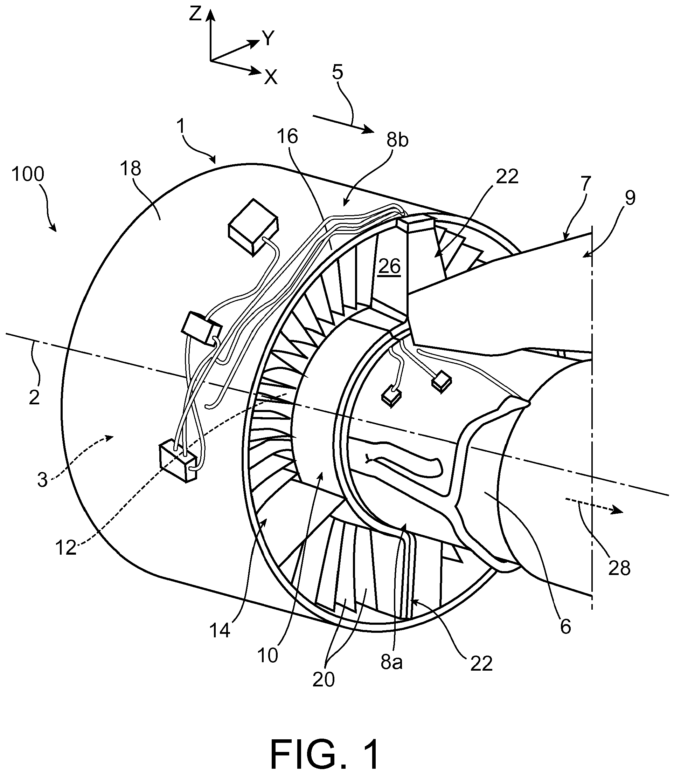

En référence tout d'abord à la figure 1, il est représenté un ensemble propulseur 100 selon un mode de réalisation préféré de l'invention. Cet ensemble 100 comporte une turbomachine 1 à double flux pour aéronef, ainsi qu'un mât d'accrochage 9 de cette turbomachine sur un élément de voilure de l'aéronef (non représenté).

L'ensemble propulseur 100 présente une direction longitudinale X, correspondant également à la direction longitudinale de la turbomachine 1 et à celle du mât 9. L'ensemble 100 présente également une direction transversale Y, ainsi qu'une direction verticale Z, correspondant à la direction de la hauteur. Les trois directions X, Y et Z sont orthogonales entre elles et forment un trièdre direct.

De préférence, le mât 9 permet de suspendre la turbomachine 1 sous une aile de l'aéronef. Ce mât comporte une partie structurale destinée à la reprise des efforts provenant de la turbomachine, cette partie étant habituellement dénommée structure primaire ou structure rigide. Elle adopte généralement la forme d'un caisson, dont seule une extrémité amont 7 est représentée sur la figure 1. Le mât est également équipé de structures secondaires (non représentées) sous forme de carénages aérodynamiques.

Dans le mode de réalisation préféré décrit et représenté, la turbomachine 1 est un turboréacteur à double flux, et à double corps. Le turboréacteur 1 présente un axe central longitudinal 2 parallèle à la direction X, et autour duquel s'étendent ses différents composants. Elle comprend, d'amont en aval selon une direction principale 5 d'écoulement des gaz à travers cette turbomachine, une soufflante 3 puis un générateur de gaz formé classiquement par des compresseurs, une chambre de combustion et des turbines. Ces éléments du générateur de gaz sont entourés par un carter central 6, également dénommé carter « core », qui délimite radialement vers l'intérieur un compartiment inter-veine 8a. Ce compartiment 8a est délimité par ailleurs radialement vers l'extérieur par un ou plusieurs capotages, dont un anneau amont 10 qui est le seul représenté sur la figure 1. L'anneau amont 10 est agencé dans la continuité aval d'un moyeu 12 d'un carter intermédiaire 14 du turboréacteur. Le carter intermédiaire 14 comporte également une virole extérieure 16 se situant dans la continuité aval d'un carter de soufflante 18. Il comporte aussi des aubes directrices de sortie 20, agencées en aval des aubes de soufflante et reliant le moyeu 12 à la virole extérieure 16.

Le carter de soufflante 18 et la virole extérieure 16 délimitent ensemble, radialement vers l'intérieur, un compartiment de soufflante 8b. Ce compartiment 8b est délimité par ailleurs radialement vers l'extérieur par un ou plusieurs capotages (non représentés), faisant partie d'une nacelle du turboréacteur. Tout comme le compartiment inter-veine 8a, ce compartiment 8b loge des équipements et des servitudes, comme cela est largement connu de l'art antérieur.

Un ou plusieurs bras 22 sont prévus pour relier les deux compartiments 8a, 8b. Ce sont par exemple deux bras 22 qui équipent le turboréacteur, respectivement agencés dans des positions horaires dites à 12h et à 6h. Ces bras 22 sont creux, et ils permettent par exemple de faire circuler des câbles électriques, et/ou des canalisations fluidiques. Plus précisément, ces bras relient une partie aval de la virole extérieure 16, à l'anneau amont 10. Pour ce faire, ils traversent une veine secondaire 26 du turboréacteur, cette veine étant en partie délimitée vers l'extérieur par la virole 16 ainsi que par des capotages (non représentés) disposés en aval de celle-ci, et en partie délimitée vers l'intérieur par l'anneau amont 10 du compartiment inter-veine 8a. La veine secondaire 26 s'ajoute à une veine primaire 28, qui transite de manière classique par le générateur de gaz.

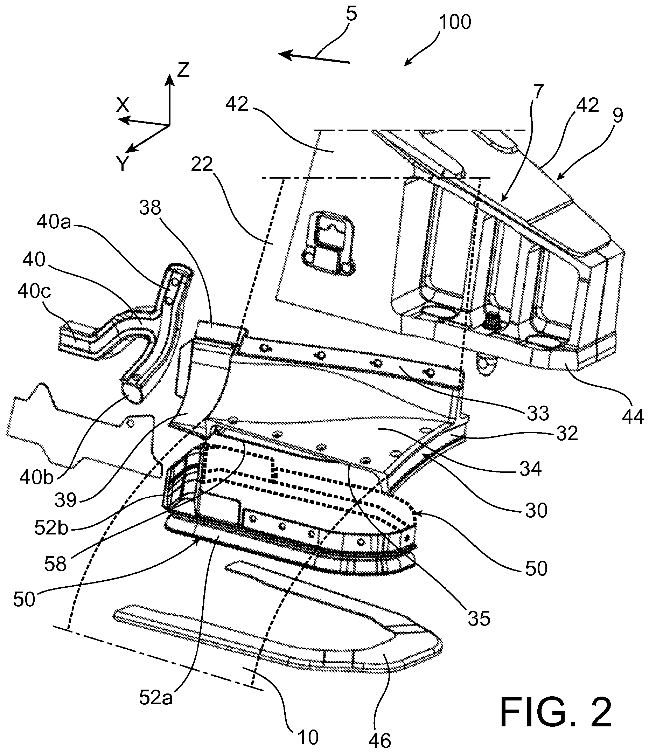

En référence à présent aux figures 2 à 5, il est représenté une partie de l'ensemble propulseur 100 impliquant l'extrémité amont 7 du mât 9, le bras 22 situé en position horaire à 12h, ainsi que l'anneau amont 10. Plus précisément, de part et d'autre de l'extrémité amont 7 du mât 9, selon la direction Y, il est prévu respectivement deux capotages de raccord 30 assurant la jonction aérodynamique entre le bras 22 et l'anneau amont 10. Ce dernier n'est ainsi pas complètement fermé sur 360°, mais il présente une ouverture angulaire centrée sur la position horaire à 12h, au niveau de laquelle les deux capotages de raccord 30 assurent la jonction avec l'extrémité radialement interne du bras 22.

Sur les figures, l'assemblage entre les différents éléments n'est représenté que pour un côté du mât, mais il est entendu qu'un assemblage identique ou similaire, de préférence symétrique, est prévu de l'autre côté de l'extrémité amont 7 du mât. Ainsi, de chaque côté du mât 9, le capotage de raccord 30 présente une extrémité amont 32 qui est destinée à se situer dans la continuité aval du moyeu de carter intermédiaire. Son extrémité haute 33 se raccorde à une paroi du bras 22, tandis que son extrémité circonférentielle 35 se raccorde à une extrémité circonférentielle de l'anneau amont 10. Enfin, son extrémité aval 38 forme un logement 39 du type secteur angulaire de gorge, logeant un joint de nacelle 40 qui est de préférence porté par un capot mobile de nacelle (non représenté sur les figures 2 à 5). Ce joint 40, également dénommé joint à trois branches ou joint tripode, comporte en effet un nœud à partir duquel s'étendent une première portion de joint 40a s'écrasant dans le logement 39 puis sur l'anneau amont 10, une seconde portion de joint 40b s'écrasant dans le logement 39 puis sur le bras 22, et une troisième portion de joint 40c s'écrasant sur une face latérale 42 du mât. Chaque branche du joint 40 est du type tubulaire, à boudin ou à bourrelet.

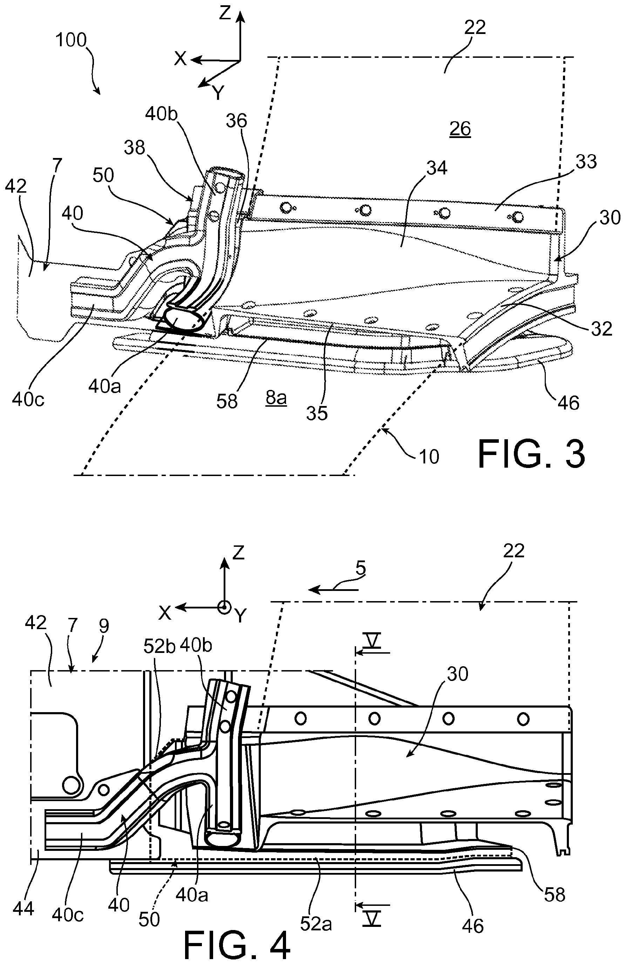

Le joint 40 adopte ainsi la position représentée sur la figure 3 après la fermeture du capot mobile de nacelle sur lequel il est implanté, capot qui présente alors une surface extérieure agencée dans la continuité aval d'une surface extérieure 34 du capotage de raccord 30.

L'extrémité amont 7 du mât 9 présente une base 44, à partir de laquelle s'étendent en particulier les deux faces latérales 42. La base 44 est solidaire d'une portée périphérique 46 en forme générale de U, suivant le contour de cette base 44. Elle est sensiblement plane, parallèle aux directions X et Y. Sa fonction réside essentiellement dans l'établissement d'une barrière anti-feu entre le compartiment inter-veine 8a, et l'extrémité amont 7 du mât. Pour satisfaire cette fonction, l'ensemble 100 comprend un dispositif de résistance au feu 50 propre à l'invention, associé à chaque capotage de raccord 30. A cet égard, il est noté que dans la suite de la description, il sera seulement décrit l'un des deux capotages de raccord 30, étant entendu que les deux capotages peuvent présenter des conceptions identiques ou similaires, en étant par exemple conçus symétriquement par rapport à un plan longitudinal XZ passant par l'axe 2. Cette configuration est représentée schématiquement sur la figure 2, montrant l'association des deux dispositifs 50 qui se rejoignent au niveau de leur extrémité amont afin de définir conjointement un profil similaire à celui de la portée périphérique 46, contre laquelle ils s'écrasent.

Le dispositif de résistance au feu 50 est ainsi interposé entre l'extrémité amont 7 du mât, et son capotage de raccord associé 30 sur lequel est fixé ce même dispositif. D'une manière générale, le dispositif 50 présente un premier organe de contact, ici une première lèvre de contact 52a, ainsi qu'un second organe de contact, ici une seconde lèvre de contact 52b, la première lèvre 52a s'appuyant contre une surface radialement externe de la portée périphérique 46, sur une demi-portion de celle-ci. Cette première lèvre de contact 52a permet qu'un feu qui se déclare dans le compartiment inter-veine 8a ne se propage pas circonférentiellement vers la face latérale 42 du mât, ni radialement vers l'extérieur en direction d'une face d'extrémité amont de ce même mât.

La seconde lèvre de contact 52b s'appuie quant à elle sur la face latérale 42 du mât, en aval des deux portions 40a, 40b du joint de nacelle 40. Elle est conçue pour stopper l'éventuel feu dans le compartiment inter-veine 8a afin qu'il ne se propage pas axialement vers l'aval, le long de la face latérale 42 du mât.

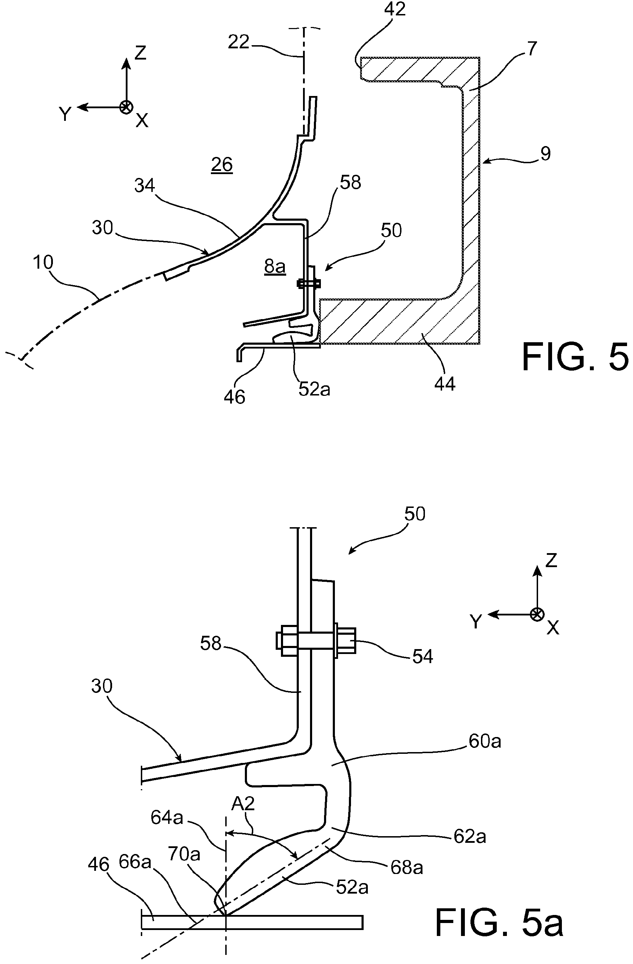

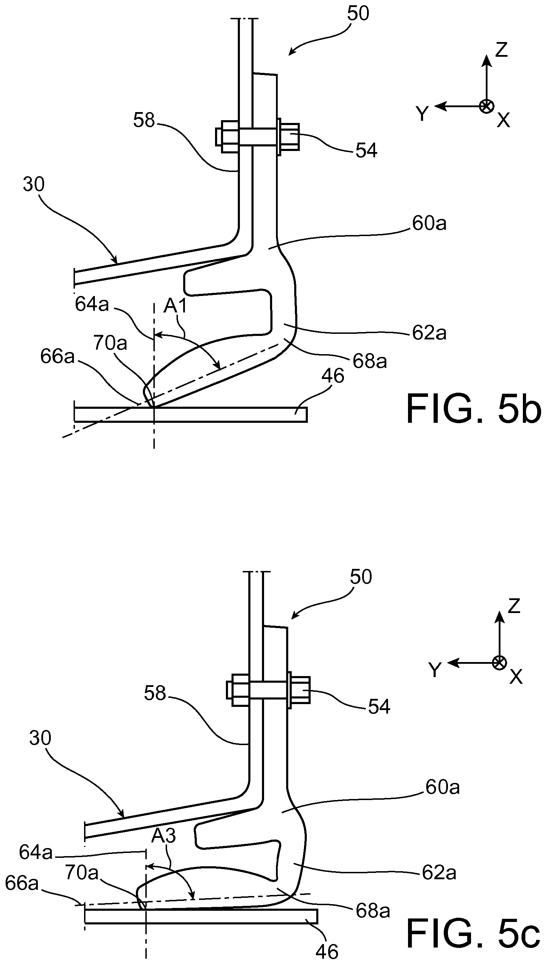

Avec ses lèvres, le dispositif 50 offre une solution astucieuse et performante pour conférer la fonction anti-feu, malgré les mouvements relatifs susceptibles d'être observés entre le turboréacteur et le mât, durant les différentes phases de vol de l'aéronef. A titre d'exemple, les figures 5 et 5a à 5c montrent différent niveaux de compression de la première lèvre 52a, en fonction de la position relative entre le turboréacteur et le mât. Sur ces figures, il est montré que le dispositif 50 est fixé à l'aide d'éléments de fixation 54 du type boulons ou rivets. Ces éléments 54 traversent en effet une portion de fixation 56 du dispositif 50, ainsi qu'un premier support 58 du capotage de raccord 30, situé radialement vers l'intérieur entre ce dernier et la portée périphérique 46. Le premier support 58 présente une forme générale de U ouvert latéralement vers l'extérieur. Le dispositif 50 comporte également une première portion de raccord 60a en forme générale de cornière, à partir de laquelle la portion de fixation 56 s'étend selon la direction Z, vers le haut. Le creux défini entre cette portion de fixation 56 et la branche supérieure de la cornière 60a, loge l'angle inférieur du U du premier support 58.

La branche inférieure de la cornière 60a se prolonge par une première zone de jonction 62a qui assure la transition avec la première lèvre de contact 52a. Cette zone de jonction 62a, éventuellement d'épaisseur réduite, sert d'articulation à la lèvre 52a qui reste préférentiellement droite et pas ou peu déformée en flexion, quel que soit le niveau de compression subi. La forme de cette lèvre 52a s'apparente à une lamelle bombée au niveau de sa surface radialement externe, opposée à sa surface radialement interne en regard de la portée périphérique 46 et présentant quant à elle une forme sensiblement plane. Les figures 5 et 5b montrent un niveau de compression nominale du dispositif 50 dans la direction Z, avec un angle d'inclinaison A1 entre la normale 64a à la surface d'appui de la portée périphérique 46, et une première direction générale de lèvre 66a définie entre une base 68a de cette première lèvre 52a, et une première extrémité de contact 70a de celle-ci. Lorsque le niveau de compression diminue tel que cela est schématisé sur la figure 5a, l'angle A2 entre la normale 64a et la direction générale de lèvre 66a est plus faible, tandis que lorsque le niveau de compression augmente tel que cela est schématisé sur la figure 5c, l'angle A3 entre la normale 64a et la direction générale de lèvre 66a est plus élevé. Ce dernier peut atteindre 90°. Dans tous les cas, c'est le niveau de déformation de la première zone de jonction 62a qui amène la lèvre 52a à adopter des angles différents par rapport à la normale 64a, étant précisé à nouveau que cette lèvre 52 reste rigide, et peu ou pas déformée en flexion.

La conception du dispositif de résistance au feu 50 permet de conserver le contact entre la première lèvre 52a et la portée périphérique 46, quel que soit les mouvements relatifs observés entre le turboréacteur et le mât, et ce dans chacune des trois directions X, Y et Z.

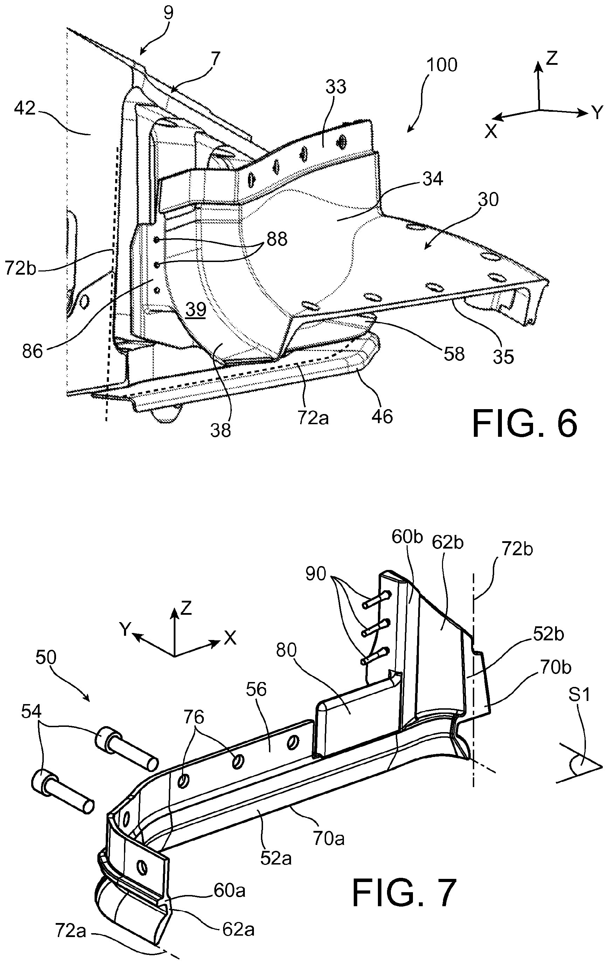

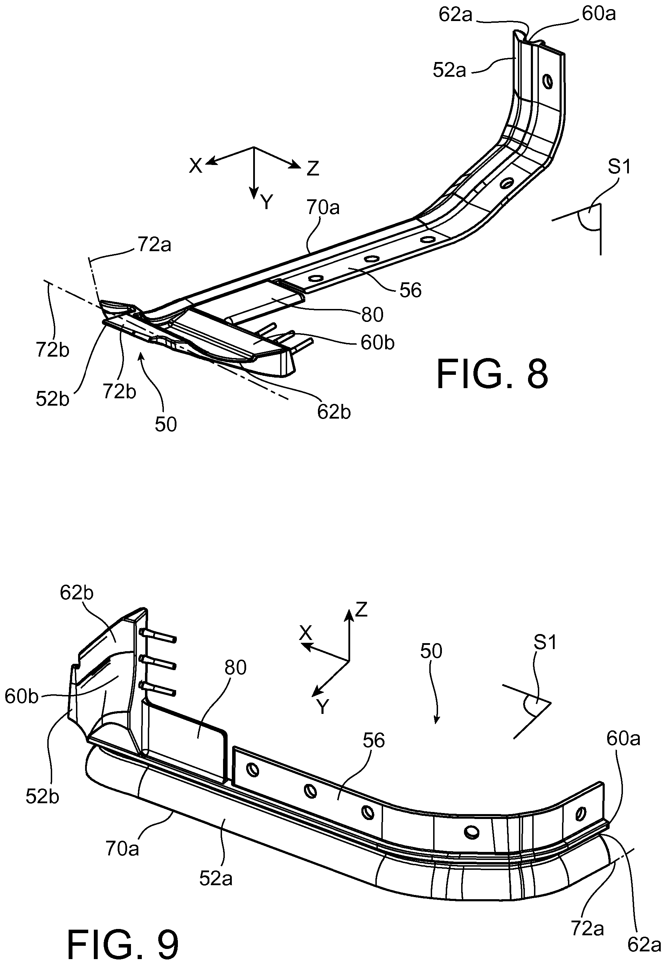

Pour ce qui concerne la première lèvre de contact 52a, elle permet d'établir une première ligne d'étanchéité sur la portée périphérique 46, comme cela est représenté sur la figure 6. Il s'agit d'une première ligne courbe 72a, suivant le profil de la demi-portion de portée 46 associée à la lèvre 52a. La première extrémité de contact de cette lèvre 52a (non représentée sur la figure 6) s'étend le long de cette première ligne courbe 72a, en forme générale de L. L'une des particularités de l'invention réside dans le fait que le dispositif 50 intègre donc la seconde lèvre précitée, dont la fonction est d'établir une seconde ligne d'étanchéité 72b sur la face latérale 42 du mât 9. Cette seconde ligne est préférentiellement droite, sensiblement parallèle à la direction Z. De préférence, les deux lignes 72a, 72b se rejoignent au niveau d'une extrémité aval radialement interne du dispositif 50. Si les deux lèvres peuvent être directement contigües, elles peuvent alternativement être reliées par la première portion de support 60a, comme cela montré sur les figures 7 à 12 montrant le dispositif 50 de manière plus détaillée. En particulier, il peut être prévu qu'une extrémité du dispositif 50 selon la première ligne courbe 72a, soit formée par une extrémité des deux lèvres 52a, 52b ainsi que par une extrémité de la portion de support 60, toutes agencées sensiblement dans un même plan.

Sur ces figures 7 à 12, il est tout d'abord représenté la première lèvre de contact 52a, sa première extrémité de contact s'étendant selon la première ligne courbe d'étanchéité 72a, la première portion de support 60a en forme de cornière, et la première zone de jonction 62a. Tous les éléments 52a, 60a, 62a s'étendent sur toute la longueur du dispositif de résistance au feu 50, parallèlement à la première ligne courbe 72a. Celle-ci s'inscrit dans une première surface de contact S1 sensiblement plane, qui correspond à la surface radialement externe de la portée périphérique 46. Cette surface S1 peut être strictement plane, ou présenter un ou plusieurs niveaux de très faible hauteur, par exemple ne dépassant pas quelques millimètres. La surface S1 correspond ainsi préférentiellement à un plan XY de l'ensemble propulseur 100. En outre, comme cela est visible sur les figures, la première ligne courbe 72a qui s'inscrit dans ce plan XY et selon laquelle s'étend la première lèvre 52a, présente bien une forme générale de L dont l'angle entre la base du L et la branche du L peut être arrondi, et dont l'extrémité libre de la branche peut également être arrondie.

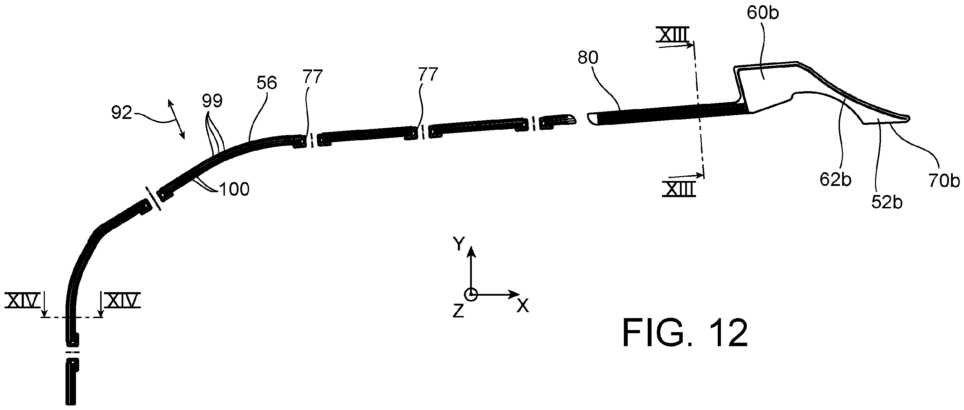

Sur une partie seulement de la première portion de support 60a, la portion de fixation de fixation 56 s'étend vers le haut selon la direction Z, sous la forme d'une lamelle percée de trous de passage 76 destinés à être traversés par les boulons 54 précités. Cette première portion de fixation 60a s'étend le long de la base du L, ainsi que sur une majeure partie de sa branche. Les trous de passage 76 peuvent être renforcés par des inserts 77 rapportés ultérieurement sur le dispositif 50, comme cela a été représenté sur la figure 12.

Sur l'autre partie de la branche du L formé par la première portion de fixation 60a, une seconde portion de support 60b s'étend également vers le haut sensiblement selon la direction Z. Plus précisément, cette seconde portion de support 60b présente une épaisseur supérieure qui s'étend vers le haut à partir d'une extrémité radiale externe de la première portion de support 60a, c'est-à-dire à partir de la branche supérieure de la cornière. Pour renforcer la tenue mécanique du dispositif 50, une nervure 80 est interposée entre la portion de fixation 56, et la seconde portion de support 60b en forme de bloc. Cette nervure 80 s'étend également vers le haut sensiblement selon la direction Z, parallèlement à la portion de fixation 56 de laquelle elle peut être écartée, selon la direction de la première ligne courbe 72a. La nervure 80 présente une épaisseur intermédiaire entre celle de la portion de fixation 56, et celle de la seconde portion de support 60b. Il en est de même pour sa hauteur selon la direction Z. La seconde portion de support 60b a pour fonction de porter la seconde lèvre 52b, via une seconde zone de jonction 62b interposée entre elles. La seconde zone de jonction 62b présente une épaisseur réduite, et sert d'articulation à la seconde lèvre 52b qui reste préférentiellement droite et pas ou peu déformée en flexion, quel que soit le niveau de compression subi.

La seconde zone de jonction 62b s'étend non seulement à partir de la seconde portion de support 60b sensiblement selon la direction X, vers l'aval, mais également à partir de la branche supérieure de la cornière 60a sensiblement selon la direction Z, vers le haut. A son extrémité aval, elle porte la lèvre 52b dont la seconde extrémité de contact 70b s'étend selon la seconde ligne 72b préférentiellement droite, et de préférence sensiblement orthogonale à la première surface de contact S1. Ainsi, la seconde ligne droite 72b s'étend de préférence sensiblement selon la direction Z, afin que la lèvre 52b contact la face latérale associée du mât.

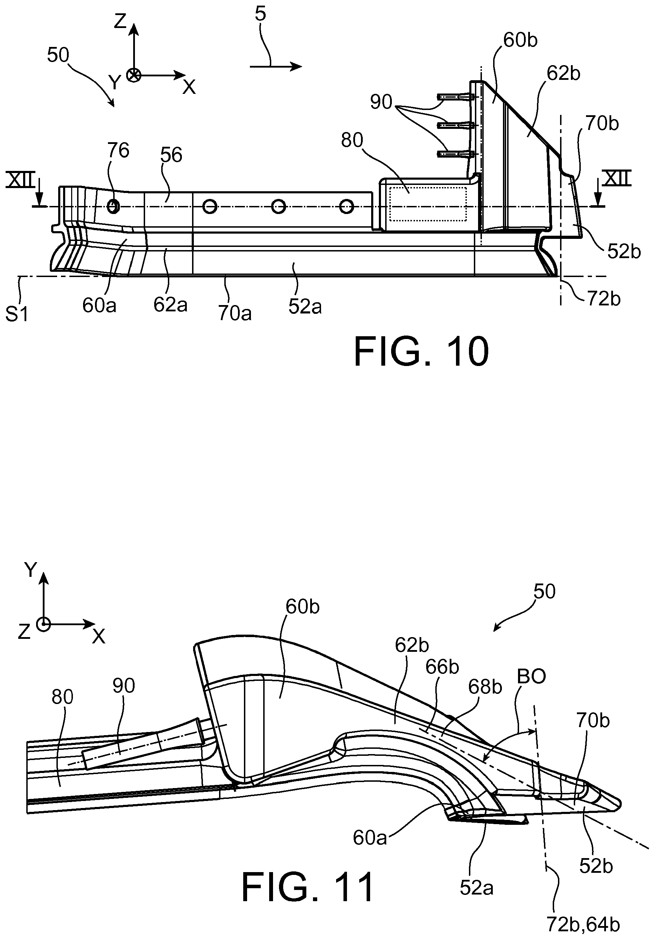

L'extrémité radiale externe de l'ensemble formé par les éléments 60b, 62b et 52b est biseautée, comme cela s'aperçoit le mieux sur la figure 10.

De plus, la seconde lèvre de contact 52b présente une épaisseur grandissante en allant de sa base 68b référencée sur la figure 11, vers la seconde extrémité de contact 70a. Par conséquent, cette dernière peut présenter un caractère surfacique, par exemple sous forme de bande verticale. A l'état non-contraint représenté sur cette figure 11, un angle d'inclinaison B0 peut être observé entre une normale 64b à la face latérale de mât (non représentée), et une seconde direction générale de lèvre 66b définie entre une base 68b, et la seconde extrémité de contact 70b de la lèvre 52b.

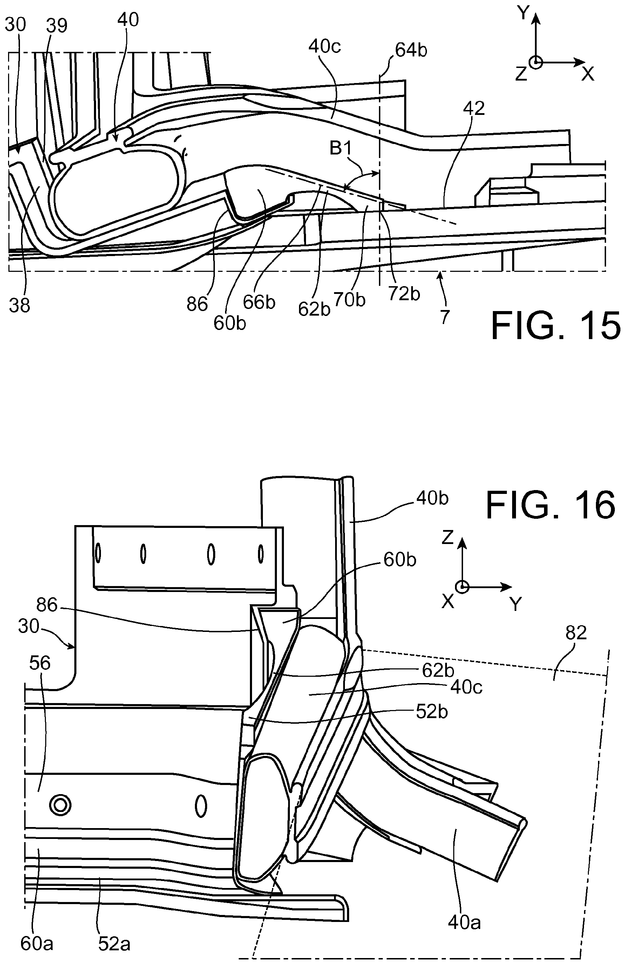

A l'état assemblé du dispositif 50, sa seconde lèvre de contact 52b est sollicitée selon la direction Y par la troisième portion 40c du joint de nacelle. En référence aux figures 15 et 16, lorsque le capot de nacelle 82 (représenté uniquement schématiquement sur la figure 16) est fermé, la troisième branche 40c du joint 40 solidaire de ce capot vient appuyer sur la seconde lèvre 52b. Celle-ci est alors contrainte entre la face latérale 42 du mât et la troisième portion 40c du joint 40, impliquant un pivotement de la lèvre 52b selon sa seconde zone de jonction 62b. Du fait de ce pivotement, l'angle B1 entre la normale 64b et la seconde direction générale de lèvre 66b est supérieur à l'angle B0 précité. La valeur de cet angle B1 dépend alors du niveau de compression du dispositif de résistance 50, qui lui-même dépend de l'amplitude des mouvements relatifs entre le turboréacteur et le mât. Les figures 15 et 16 montrent également que la troisième portion 40c du joint 40 est contrainte selon la direction Y, impliquant que sa partie tubulaire d'étanchéité est déformée entre le capot de nacelle 82 et la lèvre 52b. Ainsi, la partie tubulaire qui présente une section de forme sensiblement circulaire à l'état non-contraint, s'aplatit sous la contrainte, en adoptant une forme par exemple elliptique ou similaire.

Sur ces figures 15 et 16, il est montré que la seconde portion de support 60b du dispositif 50 est reçu dans un second support 86, prévu sur le capotage de raccord 30, au niveau de son extrémité aval 38 formant le logement de joint 39. Le second support 86, qui est le mieux visible sur la figure 6, présente des trous 88 destinés à recevoir des éléments allongés de fixation 90 portés par la portion de support 60b, du côté apposé à celui où se trouve la lèvre 52b et sa seconde zone de jonction 62b. Ces éléments allongés 90, référencés notamment sur la figure 10, sont réalisés d'une seule pièce avec le dispositif 50, ou rapportés sur ce dernier. Ils sont par exemple formés par des tiges dont l'extrémité est destinée à être écrasée sur la surface opposée du second support 86 qu'elles traversent.

Une autre particularité de l'invention réside dans la fabrication préférentiellement monobloc du dispositif de résistance au feu 50. En d'autres termes, tous les éléments précités du dispositif 50 sont réalisés d'une seule pièce, de préférence par moulage par compression. Sont éventuellement intégrés à cette pièce d'un seul tenant les éléments allongés de fixation 90, tandis que les inserts 77 sont considérés comme des éléments rapportés extérieurs au dispositif, car faisant partie des ses moyens de fixation sur le capotage de raccord 30.

Pour la fabrication du dispositif 50, il peut s'agir d'un simple bloc élastomère, mais ce dernier est préférentiellement combiné à une ou plusieurs couches de fonctionnalités diverses.

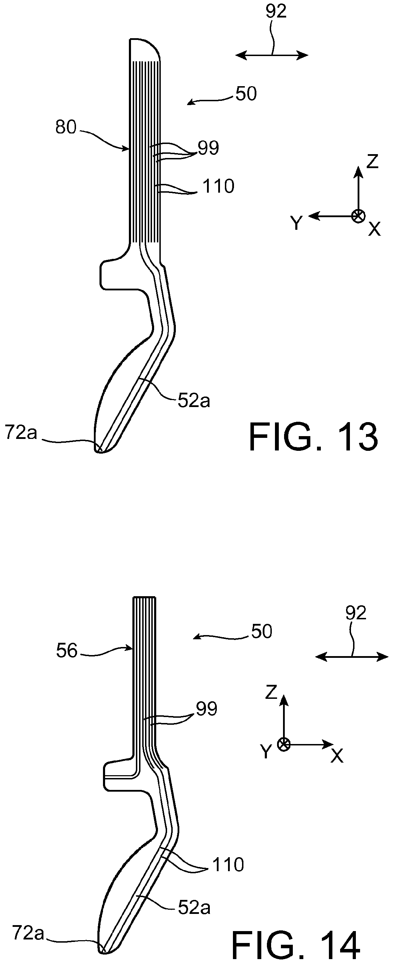

Dans l'exemple représenté sur les figures 12 à 14, le dispositif 50 est formé par la superposition, dans la direction de l'épaisseur 92 de ce dernier, de couches en matériau élastomère 99 et de préférence en matériau élastomère silicone, et de couches fonctionnelles fibreuses 110. Parmi ces dernières, il peut s'agir de couches de toile de verre, qui renforcent la rigidité du dispositif. Ensuite, il peut être prévu des couches spécifiques de résistance au feu, par exemple réalisées en fibre céramique. De préférence, celles-ci sont agencées dans les zones du dispositif les plus exposées à la flamme. Le matériau élastomère silicone des couches 99 se dégradant et se transformant en silice en cas de chaleur importante, les toiles utilisées 110 permettent, grâce à leur maillage, de retenir ces particules dégradées.

L'alternance de couches peut en outre être complétée par des couches fibreuses de meta-aramide 110, toujours pour renforcer la rigidité de l'ensemble. L'une de ces couches peut même être revêtue sur la surface extérieure des lèvres, afin de limiter leur usure et leur endommagement par les parties en contact.

Les couches 99 et 110 sont préférentiellement parallèles entre elles, en suivant le profil du dispositif 50. Au moins une ou plusieurs d'entre elles peuvent s'étendre sur toute la hauteur du dispositif 50, et d'une extrémité à l'autre de ce dernier dans la direction de la première ligne courbe précitée 72a.

Selon la direction X, le dispositif 50 peut présenter une longueur comprise entre 30 et 50 cm, tandis que selon la direction Y, la largeur de ce dispositif est de l'ordre de 10 à 20 cm. Enfin, selon la direction Z, la hauteur maximale du dispositif 50 peut être de l'ordre de 15 à 20 cm. Chaque lèvre 52a, 52b ne s'étend que sur quelques centimètres selon sa direction générale de lèvre.

Pour ce qui concerne la résistance au feu procurée par le dispositif 50, en plus de se conformer aux exigences normatives ISO 2685-1998 et AC 20-135, les conditions les plus pénalisantes sont considérées, à savoir qu'il est recherché une tenue au feu en vol et une tenue au feu au sol. Cela implique notamment de concevoir une solution assurant la fonction anti-feu dans les conditions suivantes :
- température de flamme : 1100 ± 80°C ;
- vibration : ± 0,4 mm sous une fréquence de 50 Hz ;
- pression : 0,4 bar pendant les 5 premières minutes du test feu ;
- durée du test : 15 min, décomposée en 2 phases :
   5 min : Surpression appliquée ; et
   10 min : Pression atmosphérique ;
- auto-extinction dans un temps limité.

Bien entendu, diverses modifications peuvent être apportées par l'homme du métier à l'invention qui vient d'être décrite, uniquement à titre d'exemples non limitatifs et dont la portée est définie par les revendications annexées.

## Revendications

1. Dispositif de résistance au feu (50) destiné à être interposé entre une extrémité amont (7) d'un mât d'accrochage (9) d'une turbomachine d'aéronef à double flux (1), et un capotage de raccord (30) équipant cette turbomachine, ledit capotage de raccord étant destiné à raccorder un anneau amont (10) délimitant radialement vers l'extérieur une partie d'un compartiment inter-veine (8a), à un bras (22) traversant radialement une veine secondaire (26) de la turbomachine, **caractérisé en ce que** le dispositif comprend :
- une première portion de support (60a) ;
- un premier organe de contact (52a), de préférence formé par une première lèvre de contact (52a), le premier organe (52a) étant porté par la première portion de support (60a) via une première zone de jonction (62a), et présentant une première extrémité de contact (70a) s'étendant le long d'une première ligne courbe (72a) ;
- une seconde portion de support (60b) s'étendant à partir d'une portion d'extrémité de la première portion de support (60a) ;
- un second organe de contact (52b), de préférence formé par une seconde lèvre de contact (52b), le second organe (52b) étant porté par la seconde portion de support (60b) via une seconde zone de jonction (62b) qui s'étend également à partir de la portion d'extrémité de la première portion de support (60a), le second organe (52b) présentant une seconde extrémité de contact (70b) s'étendant le long d'une seconde ligne (72b) distincte de la première ligne (72a).

2. Dispositif selon la revendication 1, **caractérisé en ce que** le dispositif de résistance au feu (50) est monobloc.

3. Dispositif selon la revendication 1 ou la revendication 2, **caractérisé en ce que** ladite seconde ligne (72b) est droite, et de préférence sensiblement orthogonale à une première surface de contact (S1) sensiblement plane dans laquelle s'inscrit la première ligne courbe (72a).

4. Dispositif selon l'une quelconque des revendications précédentes, **caractérisé en ce que** la première portion de support (60a) présente une forme générale de cornière.

5. Dispositif selon l'une quelconque des revendications précédentes, **caractérisé en ce qu'**il comprend également une portion de fixation (56) s'étendant à partir de la première portion de support (60a), ladite portion de fixation étant préférentiellement traversée par des trous de passage (76) d'éléments de fixation (54).

6. Dispositif selon l'une quelconque des revendications précédentes, **caractérisé en ce que** la seconde portion de support (60b) porte, à l'opposé du second organe de contact (52b) et de sa seconde zone de jonction (62b), des éléments allongés de fixation (90).

7. Dispositif selon l'une quelconque des revendications précédentes, **caractérisé en ce qu'**il est formé par la superposition d'au moins une couche en matériau élastomère (99), de préférence en matériau élastomère silicone, et d'au moins une couche fibreuse (110), de préférence en céramique, verre ou meta-aramide.

8. Ensemble propulseur (100) pour aéronef comprenant une turbomachine d'aéronef (1) à double flux, ainsi qu'un mât d'accrochage (9) de la turbomachine destiné à sa fixation sur un élément de voilure de l'aéronef,
la turbomachine (1) comportant un compartiment inter-veine (8a) agencé entre une veine primaire (28) et une veine secondaire (26) de la turbomachine, ainsi qu'un bras (22) traversant radialement une veine secondaire (26) et communiquant avec le compartiment inter-veine (8a), ce dernier étant en partie délimité radialement vers l'extérieur par un anneau amont (10) raccordé au bras à l'aide de deux capotages de raccord (30) agencés respectivement de part et d'autre d'une extrémité amont (7) du mât d'accrochage (9), selon une direction transversale (Y) de l'ensemble propulseur,
l'extrémité amont (7) du mât d'accrochage comprenant deux faces latérales (42), ainsi qu'une portée périphérique (46) suivant le contour d'une base (44) de cette extrémité amont de mât (7),
**caractérisé en ce que** l'ensemble propulseur (100) comprend également, associé à chaque capotage de raccord (30), un dispositif de résistance au feu (50) selon l'une quelconque des revendications précédentes, interposé entre l'extrémité amont (7) du mât d'accrochage et le capotage de raccord (30) auquel est fixé le dispositif (50).

9. Ensemble selon la revendication précédente, **caractérisé en ce que** la première extrémité de contact (70a) du premier organe de contact (52a) est en appui sur la portée périphérique (46) de l'extrémité amont (7) du mât d'accrochage, et **en ce que** la seconde extrémité de contact (70b) du second organe de contact (52b) est en appui sur la face latérale correspondante (42) de l'extrémité amont (7) du mât d'accrochage.

10. Ensemble selon la revendication 8 ou la revendication 9, **caractérisé en ce que** la première ligne courbe (72a) s'inscrit dans une première surface de contact (S1) sensiblement plane, et sensiblement parallèle à la direction transversale (Y) ainsi qu'à une direction longitudinale (X) de l'ensemble (100), et **en ce que** la seconde ligne (72b) définie par le second organe de contact (52b) est une droite s'étendant sensiblement parallèlement à une direction verticale (Z) de l'ensemble.

11. Ensemble propulseur selon l'une quelconque des revendications 8 à 10, **caractérisé en ce que** le second organe de contact (52b) est contraint entre la face latérale (42) de l'extrémité amont (7) du mât d'accrochage (9), et un joint (40) de capot mobile de nacelle (82).

12. Procédé de fabrication d'un dispositif de résistance au feu (50) selon l'une quelconque des revendications 1 à 7, **caractérisé en ce que** le dispositif (50) est réalisé monobloc, de préférence par moulage.

## Patentansprüche

1. Feuerschutzvorrichtung (50) zum Einsetzen zwischen einem stromaufwärts gelegenen Ende (7) eines Befestigungsmastes (9) einer Turbomaschine für ein Turbofan-Flugzeug (1) und eine an dieser Turbomaschine angebrachte Verkleidung (30), die dazu bestimmt ist, einen stromaufwärts gelegenen Ring (10), der einen Teil eines Venenzwischenraums (8a) radial nach außen begrenzt, an einem Arm (22) anzuschließen, indem radial eine Sekundärvene (26) des Turbotriebwerks durchquert wird, gekennzeichnet indem die Vorrichtung Folgendes beinhaltet:
- einen ersten Stützteil (60a);
- ein erstes Kontaktelement (52a), das vorzugsweise durch eine erste Kontaktlippe (52a) gebildet wird, wobei das erste Element (52a) von dem ersten Stützteil (60a) über einen ersten Verbindungsbereich (62a) getragen wird und ein erstes Kontaktende (70a) aufweist, das sich entlang einer ersten gekrümmten Linie (72a) erstreckt;
- einen zweiten Stützteil (60b), der sich von einem Endabschnitt des ersten Stützteils (60a) erstreckt;
- ein zweites Kontaktelement (52b), das vorzugsweise durch eine erste Kontaktlippe (52b) gebildet wird, wobei das zweite Element (52b) von dem zweiten Stützteil (60b) über einen zweiten Verbindungsbereich (62b) getragen wird, der sich auch von dem Endabschnitt des ersten Stützteils (60a) erstreckt, wobei das zweite Element (52b) ein zweites Kontaktende (70b) aufweist, das sich entlang einer zweiten Linie (72b) erstreckt, die sich von der ersten Linie (72a) unterscheidet.

2. Vorrichtung nach Anspruch 1, **dadurch gekennzeichnet, dass** die Feuerwiderstandsvorrichtung (50) einteilig ist.

3. Vorrichtung nach Anspruch 1 oder Anspruch 2, **dadurch gekennzeichnet, dass** die zweite Linie (72b) gerade und vorzugsweise im Wesentlichen orthogonal zu einer ersten, im Wesentlichen flachen Kontaktfläche (S1) ist, in die die erste gekrümmte Linie (72a) eingefasst ist.

4. Vorrichtung nach einem der vorhergehenden Ansprüche, **dadurch gekennzeichnet ist, dass** der erste Stützteil (60a) eine allgemeine Winkelform aufweist.

5. Vorrichtung nach einem der vorhergehenden Ansprüche, **dadurch gekennzeichnet ist, dass** er ebenfalls einen Befestigungsabschnitt (56) aufweist, der sich von dem ersten Stützabschnitt (60a) aus erstreckt, wobei der Befestigungsabschnitt Abschnitt vorzugsweise von Durchgangslöchern (76) für Befestigungselemente (54) durchsetzt ist.

6. Vorrichtung nach einem der vorhergehenden Ansprüche, **dadurch gekennzeichnet ist, dass** der zweite Stützteil (60b) gegenüber dem zweiten Kontaktelement (52b) und dessen zweite Verbindungszone (62b), längliche Befestigungselemente (90) trägt.

7. Vorrichtung nach einem der vorhergehenden Ansprüche, **dadurch gekennzeichnet ist, dass** er durch die Überlagerung von mindestens einer Schicht aus Elastomermaterial (99) gebildet wird, vorzugsweise aus Silikonelastomer, und mindestens einer Faserschicht (110), vorzugsweise aus Keramik, Glas oder Meta-Aramid.

8. Antriebseinheit (100) für ein Flugzeug, bestehend aus einer Turbomaschine für ein Turbofan-Flugzeug (1), und einen Befestigungsmast (9) für die Turbomaschine zur Befestigung dieser an einem Flügelelement des Flugzeugs,
die Turbomaschine (1) umfasst ein Venenzwischenraum (8a), der zwischen einer primären Vene (28) und einer sekundären Vene (26) der Turbomaschine angeordnet ist,
sowie einen Arm (22), der radial durch einen sekundären Kanal (26) verläuft und mit dem Venenzwischenraum (8a) in Verbindung steht, wobei letzterer teilweise radial nach außen durch einen stromaufwärts gelegenen Ring (10) begrenzt ist, der mit dem Arm über zwei Verbindungskappen (30) verbunden ist, die jeweils beiderseits eines stromaufwärts gelegenen Endes (7) des Befestigungsmastes (9) in einer Querrichtung (Y) der Antriebseinheit angeordnet sind,
das stromaufwärts gelegene Ende (7) des Befestigungsmastes beinhaltet zwei Seitenflächen (42) sowie eine Reichweite (46), die der Kontur einer Basis (44) dieses stromaufwärts gelegenen Endes des Mastes (7) folgt,
**dadurch gekennzeichnet, dass** die mit jeder Kupplungsverkleidung (30) verknüpfte Antriebseinheit (100) gemäß irgendeinem der vorhergehenden Ansprüche ebenfalls eine Feuerschutzvorrichtung (50) umfasst, die sich zwischen dem stromaufwärts gelegenen Ende (7) des Befestigungsmastes und der angebrachten Verkleidung (30), an dem die Vorrichtung (50) fixiert ist, befindet.

9. Einheit nach dem vorhergehenden Anspruch, **dadurch gekennzeichnet, dass** sich das erste Kontaktende (70a) des ersten Kontaktelementes (52a) auf die Reichweite (46) des stromaufwärtigen Endes (7) des Befestigungsmastes stützt, und dass das zweite Kontaktende (70b) des zweiten Kontaktelements (52b) auf die entsprechende Seitenfläche (42) des stromaufwärts gelegenen Endes (7) des Befestigungsmastes stützt.

10. Einheit nach Anspruch 8 oder Anspruch 9, **dadurch gekennzeichnet, dass** die erste gekrümmte Linie (72a) in eine erste Kontaktfläche (S1) eingeschrieben ist, die im Wesentlichen flach und im Wesentlichen parallel zur Querrichtung (Y) und zu einer Längsrichtung (X) der Gesamtheit (100) ist und dass die zweite Linie (72b) die durch das zweite Kontaktelement (52b) definiert ist, eine gerade Linie ist, die sich im Wesentlichen parallel zu einer vertikalen Richtung (Z) der Gesamtheit erstreckt.

11. Antriebseinheit nach einem der Ansprüche 8 bis 10, **dadurch gekennzeichnet, dass** das zweite Kontaktelement (52b) zwischen der Seitenfläche (42) des stromaufwärtigen Endes (7) des Befestigungsmastes (9) und einer Verkleidungsdichtung (40) einer beweglichen Gondelabdeckung (82) eingebettet ist.

12. Verfahren zur Herstellung einer Feuerschutzvorrichtung (50) nach einem der Ansprüche 1 bis 7, **dadurch gekennzeichnet, dass** die Vorrichtung (50) in einem Stück hergestellt ist, vorzugsweise durch Formgebung.

## Claims

1. Fire resistance device (50) designed to be interposed between an upstream end (7) of a mounting structure (9) of an aircraft dual flow turbine engine (1), and a connection cowling (30) installed on this turbine engine, said connection cowling being designed to connect an upstream ring (10) delimiting part of an inter-flow compartment (8a) radially outwards, to an arm (22) passing radially through a fan flow stream (26) of the turbine engine, **characterised in that** the device comprises:
- a first support portion (60a);
- a first contact element (52a), preferably formed by a first contact lip (52a), the first element (52a) being carried by the first support portion (60a) through a first junction zone (62a), and having a first contact end (70a) extending along a first curved line (72a);
- a second support portion (60b) extending from an end portion of the first support portion (60a);
- a second contact element (52b), preferably formed by a second contact lip (52b), the second element (52b) being carried by the second support portion (60b) via a second junction zone (62b) that also extends from the end portion of the first support portion (60a), the second element (52b) having a second contact end (70b) extending along a second line (72b) distinct from the first line (72a).

2. Device according to claim 1, **characterised in that** the fire resistance device (50) is a single-piece

3. Device according to claim 1 or claim 2, **characterised in that** said second line (72b) is straight, and preferably substantially orthogonal to a first substantially plane contact surface (S1) in which the first curved line (72a) is inscribed.

4. Device according to any one of the preceding claims, **characterised in that** the first support portion (60a) has the general shape of an angle.

5. Device according to any one of the preceding claims, **characterised in that** it also comprises an attachment portion (56) extending from the first support position (60a), said attachment portion preferably containing through holes (76) for the passage of attachment elements (54).

6. Device according to any one of the preceding claims, **characterised in that** the second support portion (60b) carries elongated attachment elements (90), opposite the second contact element (52b) and its second junction zone (62b).

7. Device according to any one of the preceding claims, **characterised in that** it is formed by the superposition of at least one layer of elastomer material (99), preferably a silicone elastomer material, and at least one fibrous layer (110), preferably made of ceramic, glass or meta-aramid.

8. Propulsion unit (100) for an aircraft comprising a dual flow turbine engine (1) for an aircraft, and a turbine machine attachment mounting (9) for use in fastening it to a wing element of the aircraft,
the turbine engine (1) comprising an inter-flow compartment (8a) formed between a core engine flow (28) and a fan flow (26) of the turbine engine, and an arm (22) passing radially through a fan flow (26), and communicating with the inter-flow compartment (8a) that is partly delimited radially outwards by an upstream ring (10) connected to the arm by means of two connection cowlings (30) arranged with one on each side of an upstream end (7) of the mounting structure (9), along a transverse direction (Y) of the propulsion assembly,
the upstream end (7) of the mounting structure comprising two lateral faces (42), and a peripheral bearing surface (46) along the contour of a base (44) of this upstream end of the mounting structure (7),
**characterised in that** the propulsion assembly (100) also comprises a fire resistance device (50) according to any one of the preceding claims, associated with each connection cowling (30), interposed between the upstream end (7) of the mounting structure and the connection cowling (30) to which the device (50) is fixed.

9. Assembly according to the preceding claim, **characterised in that** the first contact end (70a) of the first contact element (52a) bears on the peripheral bearing surface (46) of the upstream end (7) of the mounting structure, and **in that** the second contact end (70b) of the second contact element (52b) bears on the corresponding lateral face (42) of the upstream end (7) of the mounting structure.

10. Assembly according to claim 8 or claim 9, **characterised in that** the first curved line (72a) is inscribed in a first approximately plane contact surface (S1) substantially parallel to the transverse direction (Y), and to a longitudinal direction (X) of the assembly (100), and **in that** the second line (72b) defined by the second contact element (52b) is a straight line extending approximately parallel to a vertical direction (Z) of the assembly.

11. Propulsion assembly according to any one of claims 8 to 10, **characterised in that** the second contact element (52b) is constrained between the lateral face (42) of the upstream end (7) of the mounting structure (9), and a seal (40) of the pod mobile cover (82).

12. Method of manufacturing a fire resistance device (50) according to any one of claims 1 to 7, **characterised in that** the device (50) is made in a single-piece, and is preferably moulded.
